# EUROPÄISCHE PATENTANMELDUNG

(11) **EP 2 541 235 A2**
(43) Veröffentlichungstag der Anmeldung: **02.01.2013**
(21) Anmeldenummer: 12172915.6
(22) Anmeldetag: 21.06.2012
(51) Int. Cl.: G01N 21/85, E03B 3/15, E21B 47/00

(54) **Vorrichtung, Einrichtung und Verfahren zum Bestimmen des Zustands eines Brunnens**

(30) Priorität: 30.06.2011 DE 102011106070
(71) Anmelder: Hartmann, Udo, 92224 Amberg (DE)
(72) Erfinder: Hartmann, Udo, 92224 Amberg (DE)
(74) Vertreter: Müller, Thomas

(57) **Zusammenfassung**

Die vorliegende Erfindung betrifft eine Vorrichtung (10) zum optischen Bestimmen des Zustands eines Brunnens (50), ebenso wie eine Einrichtung (70) sowie ein Verfahren zum Bestimmen des Zustands eines Brunnens (50). Um einfache und kostengünstige Lösungen bereitzustellen, mittels derer eine, insbesondere kontinuierliche, Bestimmung des Zustands eines Brunnens (50) vorgenommen werden kann, damit eine Regenerierung rechtzeitig eingeleitet werden kann, weist die Einrichtung (70) bevorzugt wenigstens eine Erfassungseinrichtung (71) zum Erfassen charakteristischer Werte des Brunnens (50), auf. Hierbei kann es sich um ein geeignetes Sensorelement handeln. Weiterhin sind eine Auswerteeinrichtung (76) zum Auswerten der erfassten charakteristischen Werte des Brunnens (50) und zum Bestimmen des Zustands des Brunnens (50), und eine Anzeigeeinrichtung (81) zum Anzeigen des bestimmten Zustands vorgesehen.

## Beschreibung

Die vorliegende Erfindung betrifft zunächst eine Vorrichtung zum optischen Bestimmen des Zustands eines Brunnens gemäß dem Oberbegriff von Patentanspruch 1. Weiterhin betrifft die Erfindung auch eine Einrichtung sowie ein Verfahren zum Bestimmen des Zustands eines Brunnens gemäß den Oberbegriffen der Patentansprüche 6 und 11.

Bei den Brunnen, für die der Zustand bestimmt werden soll, handelt es sich beispielsweise um Trinkwasserbrunnen, Brauchwasserbrunnen und dergleichen, wobei die Erfindung nicht auf bestimmte Brunnentypen beschränkt ist.

Bei dem zu bestimmenden Zustand des Brunnens handelt es sich gemäß der vorliegenden Erfindung insbesondere um dessen Status. Insbesondere soll der Brunnen dahingehend überprüft werden, wann dieser gewartet werden muss, das heißt, wann ein entsprechender Service fällig ist oder wird. Im Laufe der Zeit unterliegen Brunnen in der Regel Alterungsprozessen, die beispielsweise durch Ablagerungen in Steigleitungen, in Filterrohren, im Filterkies, durch Verschleiß von Pumpeneinrichtungen, und dergleichen hervorgerufen werden. Das bedeutet, dass bei Brunnen im Laufe der Zeit ein Nachlassen der Ergiebigkeit festzustellen ist, was beispielsweise durch eine Versandung, eine Verkalkung oder eine Verockerung hervorgerufen werden kann. Von einer Verockerung eines Brunnens spricht man insbesondere dann, wenn bei eisenhaltigem oder manganhaltigem Wasser Eisen- oder manganhaltige Verbindungen ausgefällt und angelagert werden. Dies geschieht oftmals unter Mitwirkung von Mikroorganismen. Der entstehende Ocker ist in der Regel anfangs noch sehr weich, verkrustet jedoch zunehmend und kann Anlagenteile des Brunnens, ebenso wie Zwischenräume im Filterkies, verstopfen. Dadurch wird die Leistungsfähigkeit des Brunnens mit zunehmender Verockerung stark beeinträchtigt.

Die genannten Alterungsprozesse sind insbesondere abhängig von der Entnahmemenge und der Gesteinschemie und damit nicht zeitkonstant. Um einem Nachlassen der Ergiebigkeit des Brunnens und entsprechenden Alterungserscheinungen entgegenzuwirken, müssen Brunnen regelmäßig regeneriert werden.

In der DE 199 53 807 A1 ist beispielsweise beschrieben, dass reduktionsfähige Ablagerungen aus Brunnen chemisch entfernt werden. In der DE 198 08 621 A1 ist offenbart, dass eine Regenerierung von Brunnen durch Sprengungen außerhalb des Brunnenrohrs erfolgen kann.

Bislang ist es bei der Prüfung, ob ein Brunnen aufgrund seines Zustands regeneriert werden muss, erforderlich, dass man den Brunnen öffnet, um entsprechende Untersuchungen vorzunehmen. Zudem ist es bislang nicht möglich, eine zunehmende Alterung eines Brunnens, beispielsweise das Fortschreiten einer Verockerung festzustellen. Eine entsprechende Alterung, beispielsweise eine Verockerung kann erst dann festgestellt werden, wenn diese bereits weit fortgeschritten ist, was, bedingt durch die Verkrustung der Ablagerungen, Probleme bei der sich anschließenden Regenerierung hervorrufen kann. Um derartige Probleme zu vermeiden, ist es erforderlich, eine regelmäßige Überprüfung des Zustands der Brunnen vorzunehmen. Beispielsweise wird dies mittels einer Kamera-Befahrung durchgeführt, was aufwändig und kostenintensiv ist, zumal die Brunnen vorsorglich auch dann überprüft werden müssen, wenn ein kritischer Zustand noch nicht ereicht ist. Wurde ein Brunnen entsprechend überprüft, muss dieser wieder verschlossen werden. Eine Wiederinbetriebnahme des Brunnens kann dann aber erst einige Tage später erfolgen, da zunächst Wasserproben genommen und ausgewertet werden müssen. Zudem besteht bei der derzeit üblichen Überprüfungspraxis die Gefahr, dass ein regelmäßiges und damit rechtzeitiges Überprüfen des Zustands eines Brunnens vergessen wird.

In der DE 38 39 561 C2 wird in anderem Zusammenhang eine Vorrichtung zum Bestimmen von Komponenten in flüssigen Medien beschrieben. Dabei sollen Konzentrationen von Stoffen, insbesondere von Verunreinigungen, in den flüssigen Medien gemessen werden. Die Messung erfolgt dabei optisch mittels Absorptionsmessung. Die bekannte Lösung wird somit zur Trübungsmessung in flüssigen Medien eingesetzt, wobei die flüssigen Medien optisch durchsichtig sind. Die Messsignalverarbeitung erfolgt dabei in einem entsprechenden Messkopf. Damit eignet sich die bekannte Lösung nicht für die Messung in festen, nicht transparenten Medien.

Der vorliegenden Erfindung liegt deshalb die Aufgabe zugrunde, Lösungen für das Bestimmen des Zustands eines Brunnens bereitzustellen, mit denen die zuvor geschilderten Nachteile vermieden werden können. Insbesondere sollen einfache und kostengünstige Lösungen bereitgestellt werden, mittels derer eine, insbesondere in definierten zeitlichen Abständen oder eine kontinuierliche, Bestimmung des Zustands eines Brunnens vorgenommen werden kann, damit bei Bedarf eine Regenerierung rechtzeitig eingeleitet werden kann.

Diese Aufgabe wird erfindungsgemäß gelöst durch die Vorrichtung zum optischen Bestimmen des Zustands eines Brunnens mit den Merkmalen gemäß dem unabhängigen Patentanspruch 1, die Einrichtung zum Bestimmen des Zustands eines Brunnens mit den Merkmalen gemäß dem unabhängigen Patentanspruch 6 sowie das Verfahren zum bestimmen des Zustands eines Brunnens mit den Merkmalen gemäß dem unabhängigen Patentanspruch 11. Weitere Merkmale und Details der Erfindung ergeben sich aus den Unteransprüchen, der Beschreibung sowie den Zeichnungen. Dabei gelten Merkmale und Details, die im Zusammenhang mit einem der Erfindungsaspekte beschrieben sind, selbstverständlich auch vollumfänglich im Zusammenhang mit den jeweils anderen Erfindungsaspekten, und umgekehrt, so dass hinsichtlich der Offenbarung eines Erfindungsaspekts stets vollinhaltlich auch auf die beiden anderen Erfindungsaspekte Bezug genommen und verwiesen wird.

Den verschiedenen Aspekten der vorliegenden Erfindung liegt das gemeinsame erfinderische Grundkonzept zugrunde, dass Einrichtungen geschaffen werden, mittels derer der Alterungsgrad eines Brunnens bestimmt oder gemessen werden kann, wobei dies insbesondere auch kontinuierlich erfolgen kann. Aufgrund bestimmter oder gemessener charakteristischer Werte wird der Zustand, und somit der Regenerierungsbedarf eines Brunnens bestimmt.

Gemäß dem ersten Aspekt der Erfindung wird eine Vorrichtung zum optischen Bestimmen des Zustands eines Brunnens bereitgestellt, die dadurch gekennzeichnet ist, dass die Vorrichtung zum optischen Bestimmen der Verockerung des Brunnens ausgebildet ist, dass die Vorrichtung einen Grundkörper, insbesondere einen Hohlkörper, aufweist, dass ein Bereich des Grundkörpers ausgestaltet ist, so dass er eine definierte optische Messstrecke bildet oder aufweist, und dass die Vorrichtung eine Bestimmungseinrichtung zum Bestimmen der Lichtabsorption im Bereich der definierten optischen Messstrecke aufweist oder dass der Grundkörper zur Aufnahme einer Bestimmungseinrichtung zum Bestimmen der Lichtabsorption im Bereich der definierten optischen Messstrecke ausgebildet ist.

Die erfindungsgemäße Vorrichtung dient zur Bestimmung des Zustands eines Brunnens. Bei dem Zustand des Brunnens handelt es sich insbesondere, wie eingangs geschildert, um den Status beziehungsweise Servicebedarf des Brunnens, um zu prüfen, ob beziehungsweise wann der Brunnen gewartet werden muss. Eine Wartung kann beispielsweise erforderlich sein/werden, wenn der Brunnen einen kritischen Zustand erreicht oder erreicht hat. Bevorzugt ist die Vorrichtung zur kontinuierlichen Messung oder zur Messung in regelmäßigen Abständen ausgebildet, um bereits frühzeitig vor dem Erreichen eines kritischen Zustands zu erkennen, dass eine Wartung absehbar und einzuleiten ist.

Erfindungsgemäß ist vorgesehen, dass die Vorrichtung zum optischen Bestimmen der Verockerung des Brunnens ausgebildet ist. Der Zustand des Brunnens ist dann der Grad von dessen Verockerung. Es wird somit der Grad der Verockerung optisch bestimmt. Wie eingangs bereits geschildert, handelt es sich bei der Verockerung insbesondere um die Situation, wenn bei eisenhaltigem oder manganhaltigem Wasser Eisen- oder manganhaltige Verbindungen ausgefällt und angelagert werden. Dies geschieht oftmals unter Mitwirkung von Mikroorganismen. Der entstehende Ocker ist in der Regel anfangs noch sehr weich, verkrustet jedoch zunehmend und kann Anlagenteile des Brunnens, ebenso wie Zwischenräume im Filterkies, verstopfen. Dadurch wird die Leistungsfähigkeit des Brunnens mit zunehmender Verockerung stark beeinträchtigt.

Mit der vorliegenden Erfindung wird es insbesondere möglich, eine optische Messung in einem festen Medium, beispielsweise in Filterkies, durchzuführen. Bei der im Stand der Technik genannten Lösung war es lediglich möglich, eine Trübungsmessung in einem flüssigen Medium vorzunehmen, welches optisch durchsichtig ist. Die erfindungsgemäße Vorrichtung weist einen einfach aufgebauten Messkopf in Form des Grundkörpers auf, mit dem die Verockerung eines Brunnens gemessen werden kann. Im Vergleich zu der aus dem Stand der Technik bekannten optischen Messmethode wird somit nicht die Trübung des Wassers, sondern ein ganz anderer Parameter gemessen.

Die Vorrichtung, insbesondere der Grundkörper, bestehen bevorzugt aus lebensmittelechtem Material, beispielsweise aus einem Kunststoff oder einem Metall, beispielsweise aus Edelstahl.

Ein grundlegendes Merkmal der Vorrichtung besteht zunächst aus dem Grundkörper. Dabei ist die Erfindung grundsätzlich nicht auf bestimmte Ausgestaltungsformen für den Grundkörper beschränkt. Einige bevorzugte, jedoch nicht ausschließliche Ausführungsbeispiele werden im weiteren Verlauf der Beschreibung näher erläutert. Erfindungsgemäß soll der Grundkörper jedoch so ausgestaltet sein, dass er eine definierte optische Messstrecke bildet oder aufweist. Diese Messstrecke dient dazu, Messungen vorzunehmen, die eine Bestimmung des Zustands des Brunnens, insbesondere eine Bestimmung des Grades der Verockerung des Brunnens, ermöglichen.

Weiterhin weist die Vorrichtung eine Bestimmungseinrichtung zum Bestimmen der Lichtabsorption im Bereich der definierten optischen Messstrecke auf. Alternativ kann vorgesehen sein, dass der Grundkörper zur Aufnahme einer Bestimmungseinrichtung zum Bestimmen der Lichtabsorption im Bereich der definierten optischen Messstrecke ausgebildet ist. In dem letztgenannten Fall ist die Bestimmungseinrichtung - noch - nicht Bestandteil der Vorrichtung.

Mittels der Bestimmungseinrichtung ist es nunmehr insbesondere möglich, die Verockerung festzustellen. Grundsätzlich ist die Bestimmungseinrichtung zum Bestimmen der Lichtabsorption nicht auf bestimmte Ausführungsformen beschränkt.

Bevorzugt kann vorgesehen sein, dass die Bestimmungseinrichtung an einem Ende der Messstrecke eine Einrichtung zum Abstrahlen von Licht in die Messstrecke aufweist und dass die Bestimmungseinrichtung am anderen Ende der Messstrecke, vorzugsweise der Einrichtung zum Abstrahlen von Licht gegenüberliegend, eine Einrichtung zum Empfangen von Licht aus der Messstrecke aufweist. Alternativ kann vorgesehen sein, dass die Bestimmungseinrichtung an einem Ende der Messstrecke zur Anordnung einer Einrichtung zum Abstrahlen von Licht in die Messstrecke ausgebildet ist, und dass die Bestimmungseinrichtung am anderen Ende der Messstrecke, vorzugsweise der Einrichtung zum Abstrahlen von Licht gegenüberliegend, zur Anordnung einer Einrichtung zum Empfangen von Licht aus der Messstrecke ausgebildet ist. Im letztgenannten Fall ist die Bestimmungseinrichtung wiederum - noch - nicht Bestandteil der Vorrichtung.

Bevorzugt kann in einem solchen Fall vorgesehen sein, dass die beiden Einrichtungen zum Abstrahlen und Empfangen von Licht, die einen Lichtleiter aufweisen können, einander gegenüberliegend angeordnet sind.

Bevorzugt weist die Vorrichtung auch eine Auswerteeinheit auf, die insbesondere Bestandteil der Bestimmungseinrichtung sein kann. Bevorzugt weist die Einrichtung zum Abstrahlen von Licht in die Messstrecke und/oder die Einrichtung zum Empfangen von Licht aus der Messstrecke eine Schnittstelle zu der Auswerteeinheit der Bestimmungseinrichtung auf. In einem solchen Fall ist bevorzugt vorgesehen, dass sich in dem Grundkörper der Vorrichtung selbst nur zwei Lichtleiter befinden, und dass die Verarbeitung der Signale in der Auswerteeinheit erfolgt. Je nach Ausgestaltung kann vorgesehen sein, dass sich die Auswerteeinheit innerhalb oder außerhalb des Grundkörpers befindet. Befindet sich die Auswerteeinheit außerhalb des Grundkörpers, kann diese insbesondere Bestandteil einer weiter unten näher beschriebenen Einrichtung zur Bestimmung des Zustands des Brunnens, insbesondere einer Auswerteeinrichtung in einer solchen Einrichtung, sein.

Soll mit der Vorrichtung eine Verockerung festgestellt werden, kann die Vorrichtung beispielsweise im Filterkies angeordnet sein oder werden. Wichtig ist dabei, dass die Messstrecke von zu überprüfendem Material, beispielsweise von Filterkies, durchsetzt ist.

Licht, das aus der Einrichtung zum Abstrahlen von Licht austritt und in die Messstrecke eintritt, wird nach dessen Austritt aus der Einrichtung und nach dem Eintritt in die Messstrecke gestreut und zum Teil von dem in der Messstrecke befindlichen Material absorbiert. Der Rest des Lichts durchläuft die Messstrecke und tritt an deren Ende in die Einrichtung zum Empfangen von Licht ein.

Bevorzugt werden hierbei Licht-Wellenlängen verwendet, die nicht im sichtbaren Bereich liegen. In einem solchen Fall ist die Einrichtung zum Abstrahlen von Licht als Einrichtung zum Abstrahlen von Licht im nicht sichtbaren Bereich ausgebildet. Entsprechend ist dann die Einrichtung zum Empfangen von Licht als Einrichtung zum Empfangen von Licht im nicht sichtbaren Bereich ausgebildet.

Aus der Lichtdifferenz, die ein Maß für die in der Messstrecke stattgefundene Absorption ist, kann dann der Alterungsgrad des Brunnens, beispielsweise der Grad der Verockerung, bestimmt werden. Dies geschieht bevorzugt in der Auswerteeinheit der Bestimmungseinrichtung.

Ein optisches Sensorelement zum Bestimmen der Lichtabsorption, das Bestandteil der Bestimmungseinrichtung ist, ist aus dem allgemeinen Stand der Technik bereits grundsätzlich bekannt.

Über eine Lichtquelle wird das Licht, das über die Einrichtung zum Abstrahlen in die Messstrecke eintritt, erzeugt. Die Lichtintensität, die insbesondere beim Eintritt in die Messstrecke vorliegt, kann beispielsweise gemessen werden. In anderer Ausgestaltung ist auch denkbar, dass die Lichtintensität in einen anderen Wert, beispielsweise einen daraus abgeleiteten Werte, etwa einen elektrischen Strom- oder Spannungswert umgewandelt wird.

Das aus der Messstrecke austretende Restlicht wird ebenfalls gemessen, beispielsweise dessen Intensität oder ein daraus abgeleiteter Wert, etwa ein elektrischer Strom- oder Spannungswert.

Die beiden ermittelten Werte werden der Auswerteinheit der Bestimmungseinrichtung zur Verfügung gestellt. Die beiden ermittelten Werte werden in der Auswerteeinheit der Bestimmungseinrichtung miteinander verglichen, beispielsweise voneinander subtrahiert. Der Differenzwert gibt dann Auskunft darüber, wie viel Licht in der Messstrecke absorbiert worden ist. Mit der Bestimmungseinrichtung wird somit die Lichtabsorption im Bereich der Messstrecke bestimmt. Die Bestimmungseinrichtung kann eine Auswerteeinheit aufweisen. In der Auswerteeinheit kann der bestimmte Lichtabsorptionswert mit definierten Referenzwerten verglichen werden. Daraus kann dann der Zustand des Brunnens, insbesondere der Grad der Verockerung des Brunnens, abgeleitet werden.

In einer bevorzugten, konstruktiv einfachen Ausführungsform befindet sich die Auswerteeinheit der Bestimmungseinrichtung außerhalb des Grundkörpers. Der Grundkörper, der in einem solchen Fall die eigentliche Messsonde darstellt, beinhaltet nur die Einrichtung zum Abstrahlen von Licht in die Messstrecke, sowie die Einrichtung zum Empfangen von Licht aus der Messstrecke. Im einfachsten Fall befinden sich im Grundkörper lediglich zwei Signalleiter, beispielsweise Lichtleiter, die die in die Messstrecke eintretenden und aus der Messstrecke austretenden Signale, beispielsweise Lichtsignale oder daraus abgeleitete Signale zu der Auswerteeinheit der Bestimmungseinrichtung weiterleiten, wo der Grand der auftretenden Lichtabsorption beim Durchtritt des Lichts durch die Messstrecke, bestimmt wird.

Wie eingangs bereits geschildert worden ist, können Ablagerungen, beispielsweise Verockerungen dazu führen, dass es zu Verstopfungen des permeablen Hohlraums im Filterkies kommt. Je höher der Grad der Verstopfung, desto mehr Licht wird absorbiert. Das bedeutet, dass bei einer hohen Lichtabsorption ein hoher Alterungsgrad des Brunnens erreicht ist.

Durch die erfindungsgemäße Vorrichtung kann nun bei Bedarf, beispielsweise in festgelegten Zeitabständen, gegebenenfalls auch kontinuierlich, die Lichtabsorption in der Messstrecke gemessen werden. Dabei muss der Brunnen nicht mehr, wie bisher erforderlich, geöffnet werden. Die gemessenen Absorptionswerte können, wie im weiteren Verlauf der Beschreibung noch erläutert werden, gegen Referenzwerte verglichen werden. Wird ein Referenzwert, beispielsweise in Form eines Schwell- oder Grenzwerts, erreicht oder überschritten oder unterschritten, kann ein kritischer Zustand erreicht sein, so dass eine Regenerierung des Brunnens vorgenommen werden muss.

Bevorzugt ist der Grundkörper der erfindungsgemäßen Vorrichtung zum Bestimmen des Zustands des Brunnens als Hohlkörper ausgebildet. Beispielsweise kann der Grundkörper rohrförmig ausgebildet sein wobei der rohrförmige Grundkörper an wenigstens einem Rohrende offen ist. Bevorzugt kann der Grundkörper an beiden Rohrenden offen sein.

Auf diese Weise ist es beispielsweise möglich, dass die Vorrichtung über den Grundkörper in einem Peilrohr integriert wird. Ein Peilrohr dient bei Brunnen insbesondere zum Messen des Grundwasserstands, zur Entnahme von Wasserproben, zur Kontrolle der Brunnenalterung, etwa hinsichtlich Korrosion, Versandung, und dergleichen. Sofern beim Bau eines Brunnens ein Peilrohr verbaut wird, kann eine rohrförmige Vorrichtung auf einfache Weise in das Peilrohr integriert werden. Dazu weist deren Grundkörper an dem wenigstens einen offenen Rohrende bevorzugt ein Gewinde auf, mit dem die Vorrichtung mit dem Peilrohr dicht verschraubt werden kann, so dass es insbesondere zu keiner Verkeimung kommen kann. Bevorzugt können in einem Peilrohr mehrerer Vorrichtungen, bevorzugt in unterschiedlichen Höhen, vorgesehen sein.

Bevorzugt ist der Grundkörper in einer Weise ausgebildet, dass er wenigstens eine Einziehung aufweist, wobei die Einziehung die optische Messstrecke definiert. Bei einer Einziehung handelt es sich insbesondere um einen Bereich des Grundkörpers, der schmaler ist als der Rest des Grundkörpers, und der insbesondere eine kleinere Fläche hat als der Rest des Grundkörpers. Man könnte eine solche Einziehung deshalb auch als, insbesondere einseitige, Einschnürung oder Einbuchtung oder Vertiefung bezeichnen. In einer seitlichen Draufsicht auf den Grundkörper könnte die Einziehung beispielsweise einen U-förmigen Verlauf zeigen.

Beispielsweise kann vorgesehen sein, dass der Grundkörper eine Grundquerschnittsfläche aufweist, dass der Grundkörper im Bereich der Einziehung eine zweite, von der Grundquerschnittsfläche abweichende, Querschnittsfläche aufweist und dass die zweite Querschnittsfläche kleiner als die Grundquerschnittsfläche ist.

Beispielsweise kann vorgesehen sein, dass der Grundkörper im Bereich der Grundquerschnittsfläche eine Außenwandung aufweist, wobei die Außenwandung im Bereich der Einziehung - vorzugsweise U-förmig oder annäherungsweise U-förmig - nach innen versetzt ist. Da die Außenwandung des Grundkörpers an sich durchgängig und nicht unterbrochen ist, ist zudem ein Übergangsbereich vorgesehen, in dem die Außenwandung den nach innen versetzten Verlauf nimmt.

Die erfindungsgemäße Vorrichtung ist nicht auf bestimmte Konstruktionsmaße beschränkt. Beispielsweise, jedoch nicht ausschließlich, könnte eine rohrförmige Vorrichtung einen Grundkörper mit einer Länge von 500 mm aufweisen. Eine Einziehung könne beispielsweise eine Länge von 100 mm haben, wobei eine solche Länge dann auch der Länge der Messstrecke entsprechen kann. Die Tiefe der Einziehung könnte beispielsweise 30 mm betragen.

Gemäß einem zweiten Aspekt der Erfindung wird eine Einrichtung zum Bestimmen des Zustands eines Brunnens bereitgestellt, die gekennzeichnet ist durch eine Auswerteeinrichtung zum Auswerten erfasster charakteristischer Werte des Brunnens und zum Bestimmen des Zustands des Brunnens. Die Auswerteeinrichtung weist eine Schnittstelle zu wenigstens einer Erfassungseinrichtung und/oder einer Eingabeeinrichtung zum Erfassen charakteristischer Werte des Brunnens auf. Über die Schnittstelle können, wie weiter unten noch näher erläutert wird, charakteristische Werte des Brunnens, die von einer Erfassungseinrichtung erfasst worden sind, zu der Einrichtung, das heißt zu der Auswerteinrichtung der Einrichtung übertragen werden. Über eine Eingabeeinrichtung können charakteristische Werte des Brunnens in die Auswerteeinrichtung eingegeben, beispielsweise eingelesen, werden.

Weiterhin weist die Einrichtung zum bestimmen des Zustands des Brunnens eine Anzeigeeinrichtung zum Anzeigen des bestimmten Zustands und/oder eine Schnittstelle zu einer solchen Anzeigeeinrichtung auf. Beispielsweise kann vorgesehen sein, dass die Anzeigeeinrichtung Bestandteil der Auswerteeinrichtung ist, und/oder dass die Anzeigeeinrichtung zur Auswerteeinrichtung extern ausgebildet ist.

Im einfachsten Fall weist die Einrichtung zum bestimmen des Zustands des Brunnens eine Auswerteeinrichtung auf, über die der Zustand des Brunnens bestimmt werden kann.

In weiterer Ausgestaltung kann vorgesehen sein, dass der Auswerteeinrichtung eine Anzeigeeinrichtung zugeordnet ist.

Bevorzugt kann weiterhin vorgesehen sein, dass die Einrichtung zur Bestimmung des Zustands des Brunnens wenigstens eine Erfassungseinrichtung zum Erfassen charakteristischer Werte des Brunnens aufweist.

Beispielsweise kann vorgesehen sein, dass die Auswerteeinrichtung und die Anzeigeeinrichtung als ein einziges Gerät vorliegen. Ebenso könnte auch wenigstens eine Erfassungseinrichtung Bestandteil eines solchen Geräts sein.

In anderer Ausgestaltung kann aber auch vorgesehen sein, dass die Erfassungseinrichtung und/oder die Auswerteeinrichtung und/oder die Anzeigeeinrichtung als voneinander separate Geräte oder Bauteile vorliegen. Dann können die entsprechenden Werte und Daten über geeignete Schnittstellen übertragen werden. Eine solche Ausgestaltung macht es beispielsweise möglich, dass mehrere Brunnen von einer zentralen Auswerteeinrichtung überwacht werden. Die Anzeigeeinrichtung kann sich gegebenenfalls wiederum an einem anderen Ort befinden. Die Übertragung beziehungsweise Kommunikation kann über drahtgebundene oder drahtlose Kommunikationsnetzwerke, beispielsweise über ein Mobilfunknetz, erfolgen. Bevorzugt ist vorgesehen, dass die Auswerteeinrichtung eine Schnittstelle zur Erfassungseinrichtung und(oder eine Schnittstelle zur Anzeigeeinrichtung aufweist.

Über die wenigstens eine Erfassungseinrichtung, die im weiteren Verlauf der Beschreibung noch näher erläutert wird, werden charakteristische Werte des Brunnens, die zur Bestimmung des Zustands des Brunnens herangezogen werden können, erfasst. Die erfassten Werte werden einer Auswerteeinrichtung zur Verfügung gestellt. In der Auswerteeinrichtung, die im weiteren Verlauf noch näher erläutert wird, werden die erfassten charakteristischen Werte des Brunnens ausgewertet. Darauf basierend wird der Zustand des Brunnens bestimmt. Die Auswerteeinrichtung bestimmt somit, wann ein Service für den Brunnen, beispielsweise eine Wartung, fällig ist oder wird. Bei der Auswerteeinrichtung handelt es sich somit um eine Art Serviceanzeige oder Wartungsanzeige. Bezüglich eines solchen Services oder einer solchen Wartung für dien Brunnen wird auch auf die entsprechenden Ausführungen im Zusammenhang mit der erfindungsgemäßen Vorrichtung weiter oben Bezug genommen und verwiesen. Die Auswerteeinrichtung kann beispielsweise eine Rechnereinrichtung, etwa eine CPU (Central Processing Unit), aufweisen. Der auf diese Weise bestimmte Zustand des Brunnens kann dann einer Anzeigeeinrichtung zur Verfügung gestellt werden. Beispielsweise kann die Anzeigeeinrichtung ein Display aufweisen, auf dem der Zustand des Brunnens angezeigt wird. Beispielsweise kann vorgesehen sein, dass auf der Anzeigeeinrichtung angezeigt wird, wenn der Brunnen oder ein Bauteil des Brunnens einen solch kritischen Alterungsgrad erreichen wird oder erreicht hat, dass eine Regenerierung des Brunnens erforderlich wird.

Die Erfassungseinrichtung dient dazu, charakteristische Werte des Brunnens zu erfassen. Die Erfassungseinrichtung weist dazu bevorzugt wenigstens ein Sensorelement auf. Die von der Erfassungseinrichtung erfassten Werte werden der Auswerteeinrichtung, beispielsweise der Rechnereinrichtung der Auswerteeinrichtung, zur Verfügung gestellt. Die Erfassungseinrichtung kann beispielsweise über eine ihr zugeordnete Auswerteeinheit verfügen. Dabei können das Sensorelement und die Auswerteeinheit der Erfassungseinrichtung räumlich getrennt sein. Beispielsweise kann die Auswerteeinheit der Erfassungseinrichtung in der Auswerteeinrichtung vorgesehen sein. Die Auswerteeinrichtung kann beispielsweise ein Ein-/Aisgabemodul aufweisen, in dem die Signale digitalisiert werden.

Nachfolgend werden einige Beispiele für verschiedene Erfassungseinrichtungen beschrieben, die einzeln oder in jeder beliebigen Kombination in der Einrichtung zum Bestimmen des Zustands des Brunnens realisiert sein können. Dabei ist die Erfindung nicht auf die konkret beschriebenen Beispiele beschränkt.

Beispielsweise kann vorgesehen sein, dass wenigstens eine Erfassungseinrichtung zum Erfassen charakteristischer Werte des Brunnens wenigstens ein Sensorelement zur Erfassung der Durchflussmenge von Wasser aufweist. Beispielsweise kann eine Erfassungseinrichtung einen magnetisch induktiven Durchflusssensor und/oder ein Sensorelement zur Wasserstandsmessung aufweisen.

Alternativ oder zusätzlich kann vorgesehen sein, dass wenigstens eine Erfassungseinrichtung zum Erfassen charakteristischer Werte des Brunnens ein Sensorelement zur - insbesondere optischen - Erfassung von Belägen an Rohrinnenwänden aufweist.

Alternativ oder zusätzlich kann vorgesehen sein, dass wenigstens eine Erfassungseinrichtung zum Erfassen charakteristischer Werte des Brunnens ein Drucksensorelement aufweist. Damit kann insbesondere der Wasserstand im Brunnen und/oder die Absenkung des Wasserstands im Brunnen gemessen werden.

Alternativ oder zusätzlich kann vorgesehen sein, dass wenigstens eine Erfassungseinrichtung zum Erfassen charakteristischer Werte des Brunnens ein Ultraschallsensorelement und/oder ein Sonarsensorelement aufweist. Damit kann beispielsweise eine Auflandungsmessung vorgenommen werden.

Alternativ oder zusätzlich kann vorgesehen sein, dass wenigstens eine Erfassungseinrichtung zum Erfassen charakteristischer Werte des Brunnens ein Sensorelement zur Bestimmung charakteristischer Werte einer Pumpeneinrichtung aufweist. Gemessen werden können beispielsweise die Pumpenkennlinie, die Pumpenleistung, die Stromaufnahme, die Drehzahl, die Temperatur, der Leistungsfaktor oder dergleichen.

Alternativ oder zusätzlich kann vorgesehen sein, dass wenigstens eine Erfassungseinrichtung zum Erfassen charakteristischer Werte des Brunnens ein optisches Sensorelement zum Bestimmen des Zustands eines Brunnens aufweist. Ein solches Sensorelement kann beispielsweise eine wie weiter oben beschriebene Bestimmungseinrichtung zum Bestimmen der Lichtabsorption sein oder aufweisen.

Alternativ oder zusätzlich kann vorgesehen sein, dass wenigstens eine Erfassungseinrichtung zum Erfassen charakteristischer Werte des Brunnens eine wie vorstehend beschriebene erfindungsgemäße Vorrichtung aufweist, so dass an dieser Stelle auf die entsprechenden Ausführungen weiter oben vollinhaltlich Bezug genommen und verwiesen wird.

Grundsätzlich ist es nicht erforderlich, das bestimmte Kombinationen von Erfassungseinrichtungen, oder eine bestimmte Anzahl von Erfassungseinrichtungen oder bestimmte Typen von Erfassungseinrichtungen vorgesehen sind. Bevorzugt ist jedoch eine Ausführung, bei der unterschiedliche Typen von Erfassungseinrichtungen zu Einsatz kommen.

Bevorzugt ist vorgesehen, dass eine Speichereinrichtung vorgesehen ist, in der Referenzwerte zu den - von den Erfassungseinrichtungen - erfassten charakteristischen Werten des Brunnens abgelegt sind.

Die Auswerteeinrichtung verfügt bevorzugt über eine Vergleichseinrichtung zum Erzeugen von Vergleichswerten durch Vergleichen der erfassten charakteristischen Werte mit Referenzwerten. Weiterhin weist die Auswerteeinrichtung insbesondere eine Bestimmungseinrichtung zum Bestimmen des Zustands des Brunnens auf Basis der von der Vergleichseinrichtung erzeugten Vergleichswerte auf. Beispielsweise kann vorgesehen sein, dass der erfasste charakteristische Wert vom Referenzwert subtrahiert wird. Der Differenzwert kann dann ein Maß für den bestehenden Zustand darstellen. In anderer Ausgestaltung kann vorgesehen sein, dass es sich bei dem Referenzwert um einen Schwellwert oder Grenzwert handelt. Errecht oder übersteigt oder unterschreitet je nach Ausgestaltung der dazugehörigen Erfassungseinrichtung der erfasste charakteristische Wert den Referenzwert, kann dies bedeuten, dass ein kritischer Zustand erreicht ist, der eine Regenerierung des Brunnens erforderlich macht.

Gemäß einem dritten Aspekt der Erfindung wird ein Verfahren zum Bestimmen des Zustands eines Brunnens bereitgestellt, dass gekennzeichnet ist durch folgende Schritte:
a) erfasste charakteristische Werte des Brunnens werden von einer Auswerteeinrichtung zum Auswerten der erfassten charakteristischen Werte des Brunnens und zum Bestimmen des Alterungsgrades des Brunnens empfangen, insbesondere über eine entsprechende Schnittstelle der Auswerteeinrichtung;
b) anhand der erfassten charakteristischen Werte wird in der Auswerteeinrichtung, insbesondere automatisch, der Zustand des Brunnens bestimmt;
c) der bestimmte Zustand wird von der Auswerteeinrichtung (76) zu einer Anzeigeeinrichtung (81) zum Anzeigen des bestimmten Zustands übertragen.

Bevorzugt werden mittels wenigstens einer Erfassungseinrichtung zum Erfassen charakteristischer Werte des Brunnens, die im Brunnen oder in der Umgebung des Brunnens vorgesehen ist, insbesondere in definierten Zeitabständen oder kontinuierlich, charakteristische Werte des Brunnens erfasst und an die Auswerteeinrichtung übertragen. Über eine entsprechende Schnittstelle der Auswerteeinrichtung werden diese charakteristischen Werte in der Auswerteeinrichtung empfangen. In einem solchen Fall läuft das Verfahren insbesondere wie folgt ab:
a) mittels wenigstens einer Erfassungseinrichtung zum Erfassen charakteristischer Werte des Brunnens, die im Brunnen oder in der Umgebung des Brunnens vorgesehen ist, werden, insbesondere in definierten Zeitabständen oder kontinuierlich, charakteristische Werte des Brunnens erfasst;
b) die erfassten charakteristischen Werte werden an eine Auswerteeinrichtung zum Auswerten der erfassten charakteristischen Werte des Brunnens und zum Bestimmen des Zustands des Brunnens übertragen;
c) anhand der erfassten charakteristischen Werte wird in der Auswerteeinrichtung der Zustand des Brunnens bestimmt;
d) der bestimmte Zustand wird von der Auswerteeinrichtung zu einer Anzeigeeinrichtung zum Anzeigen des bestimmten Zustands übertragen.

Bevorzugt werden die erfassten charakteristischen Werte in der Auswerteeinrichtung mit Referenzwerten zu den charakteristischen Werten verglichen, wobei auf Basis des Vergleichs der Zustand des Brunnens bestimmt wird.

Bevorzugt kann das Verfahren mit einer wie vorstehend beschriebenen erfindungsgemäßen Einrichtung durchgeführt, so dass hinsichtlich der Funktionsweise des Verfahrens auch auf die vorstehenden Ausführungen zur erfindungsgemäßen Einrichtung vollinhaltlich Bezug genommen und verwiesen wird.

Bevorzugt kann die Erfassungseinrichtung zum Erfassen charakteristischer Werte des Brunnens wenigstens eine wie weiter oben beschriebene erfindungsgemäße Vorrichtung zum Bestimmen des Zustands eines Brunnens aufweisen, so dass hinsichtlich der Funktionsweise des Verfahrens diesbezüglich auch auf die vorstehenden Ausführungen zur erfindungsgemäßen Vorrichtung vollinhaltlich Bezug genommen und verwiesen wird. In einem solchen Fall wird die Lichtabsorption im Bereich einer definierten optischen Messstrecke bestimmt, wobei auf Basis der bestimmten Lichtabsorptionswerte der Alterungsgrad des Brunnens bestimmt wird.

Bevorzugt kann die Erfassungseinrichtung zum Erfassen charakteristischer Werte des Brunnens wenigstens ein Sensorelement zur Erfassung der Durchflussmenge von Wasser und/oder wenigstens ein Sensorelement zur Wasserstandsmessung und/oder wenigstens ein Sensorelement zur Erfassung von Belägen an Rohrinnenwänden und/oder wenigstens ein optisches Sensorelement zum Bestimmen des Zustands eines Brunnens und/oder wenigstens ein Drucksensorelement und/oder wenigstens ein Ultraschallsensorelement und/oder wenigstens ein Sonarsensorelement und/oder wenigstens ein Sensorelement zur Bestimmung charakteristischer Werte einer Pumpeneinrichtung aufweisen, wobei dann auf Basis der von dem wenigstens einen Sensorelement erfassten charakteristischen Werte der Zustand des Brunnens bestimmt wird.

Bei dem bestimmten Zustand des Brunnens kann es sich beispielsweise um den Alterungsgrad des Brunnens handeln, wobei die Erfindung natürlich nicht auf diesen konkreten Zustandstyp beschränkt ist.

Die Erfindung wird nun anhand von Ausführungsbeispielen unter Bezugnahme auf die beiliegenden Zeichnungen näher erläutert. Es zeigen
- Figur 1: ein Ausführungsbeispiel einer erfindungsgemäßen Vorrichtung zum Bestimmen des Zustands eines Brunnens;
- Figur 2: ein Peilrohr mit einer erfindungsgemäßen Vorrichtung gemäß Figur 1;
- Figur 3: ein erstes Ausführungsbeispiel eines erfindungsgemäßen Systems zum Bestimmen des Zustands eines Brunnens; und
- Figur 4: ein zweites Ausführungsbeispiel eines erfindungsgemäßen Systems zum Bestimmen des Zustands eines Brunnens.

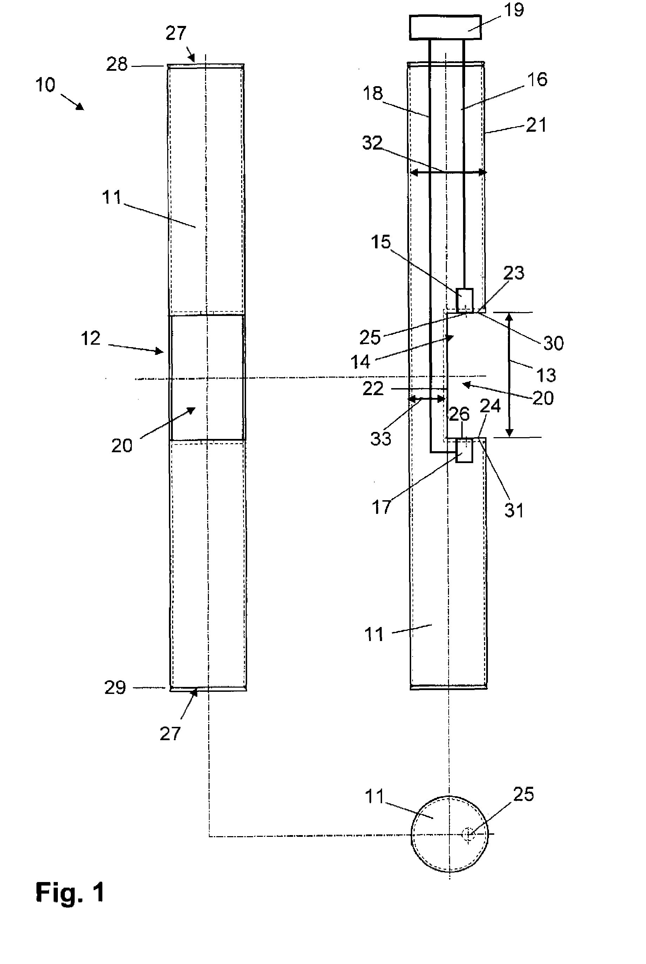

In Figur 1 ist eine Vorrichtung 10 zum Bestimmen des Zustands eines Brunnens (nicht dargestellt) gezeigt, die einen rohrförmigen Grundkörper 11 aufweist. Der linke Bereich von Figur 1 zeigt eine Draufsicht auf die Vorrichtung, während der rechte Teil von Figur 1 eine seitliche Querschnittsansicht zeigt. Der untere Bereich von Figur 1 zeigt eine Draufsicht von oben auf den rohrförmigen Grundkörper 11.

Der Grundkörper 11 weist ein offenes oberes Rohrende 28 und ein offenes unteres Rohrende 29 auf, wobei im Bereich der Rohrenden Gewinde 27 vorgesehen sind.

Ein Bereich 12 des Grundkörpers 11, der als Einziehung 20 ausgebildet ist, bildet eine optische Messstrecke 13. Wie aus dem rechten Teil von Figur 1 zu ersehen ist, weist die Einziehung 20 in der Seitenansicht einen U-förmigen Verlauf beziehungsweise eine U-förmige Kontur auf. Dazu verfügt der Grundkörper 11 zunächst über eine Grundkörperquerschnittsfläche 32. Im Bereich der Einziehung 20 weist der Grundkörper 11 eine zweite Querschnittsfläche 33 auf, die kleiner ist als die Grundquerschnittsfläche 32.

Die Grundkörperwand 21 weist im Bereich der Einziehung 20 einen zur Grundkörperwand 21 zurückgesetzten, das heißt nach innen versetzten Wandbereich 22 auf, wobei der Wandbereich 22 mit der Grundkörperwand 21 über Verbindungswände 23, 24 verbunden ist. Bevorzugt sind die Verbindungswände 23, 24 im rechten Winkel zur Grundkörperwand 21 beziehungsweise der zurückgesetzten Wand 22 ausgerichtet. In den Verbindungswänden 23, 24 befinden sich Öffnungen 25, 26 zur Aufnahme von Einrichtungen zum Abstrahlen und Empfangen von Licht.

Die Vorrichtung 10 verfügt ferner über eine Bestimmungseinrichtung 14 zum Bestimmen der Lichtabsorption. Die Bestimmungseinrichtung 14 verfügt über eine Einrichtung 15 zum Abstrahlen von Licht, die am oberen Ende 30 der Messstrecke 13 in der Verbindungswand 23 angeordnet ist. Die Bestimmungseinrichtung 14 weist zudem eine Einrichtung 17 zum Empfangen von Licht auf, die am unteren Ende 32 der Messstrecke 13 in der Verbindungswand 24 angeordnet ist. Die Einrichtungen 15, 17 sind über Lichtleiter 16, 18 mit einer Auswerteeinheit 19 der Bestimmungseinrichtung 14 verbunden, wobei sich die Auswerteeinheit 19 bevorzugt außerhalb des Grundkörpers 11 befindet.

Zunächst wird Licht mittels einer Lichtquelle mit bestimmter Intensität erzeugt, über den Lichtleiter 16 zur Einrichtung 15 transportiert und von dort in die Messstrecke 13 abgestrahlt. Im bestimmungsgemäßen Gebrauch der Vorrichtung 13 ist die Messstrecke mit Material durchsetzt, dessen Alterungsgrad bestimmt werden soll. Beim Hindurchlaufen durch die Messstrecke 13 wird ein Teil des Lichts von dem in der Messstrecke 13 befindlichen Material absorbiert. Der Rest des Lichts tritt in die Einrichtung 17 zum Empfangen von Licht ein und wird über den Lichtleiter 18 zur Auswerteeinheit 19 geleitet. Dort werden die Lichtwerte miteinander verglichen, beispielsweise indem die Werte in elektrische Strom,- oder Spannungswerte umgewandelt werden. Die Differenz entspricht der Lichtabsorption, die wiederum ein Maß für den Zustand des Materials, beispielsweise für dessen Verockerungsgrad, in der Messstrecke 13 darstellt.

Wenn das in der Messstrecke 13 befindliche Material, beispielsweise durch Verockerung beziehungsweise die eingetretene Verkrustung, verstopft ist, wird mehr Licht in der Messstrecke 13 absorbiert. Je mehr Licht absorbiert ist, desto größer ist die Verockerung.

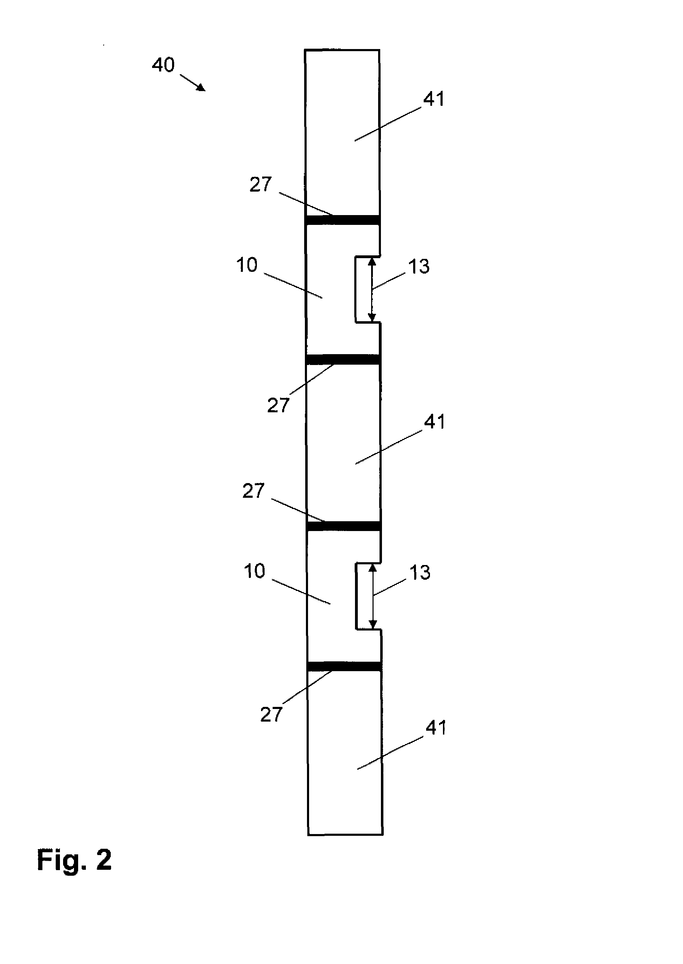

Die Vorrichtung 10 kann, wie in Figur 2 dargestellt ist, über die Gewinde 27 beispielsweise dicht mit Segmenten 41 eines Peilrohrs 40 verschraubt werden. In einem Peilrohr 40 können mehrere Vorrichtungen 10 vorgesehen sein.

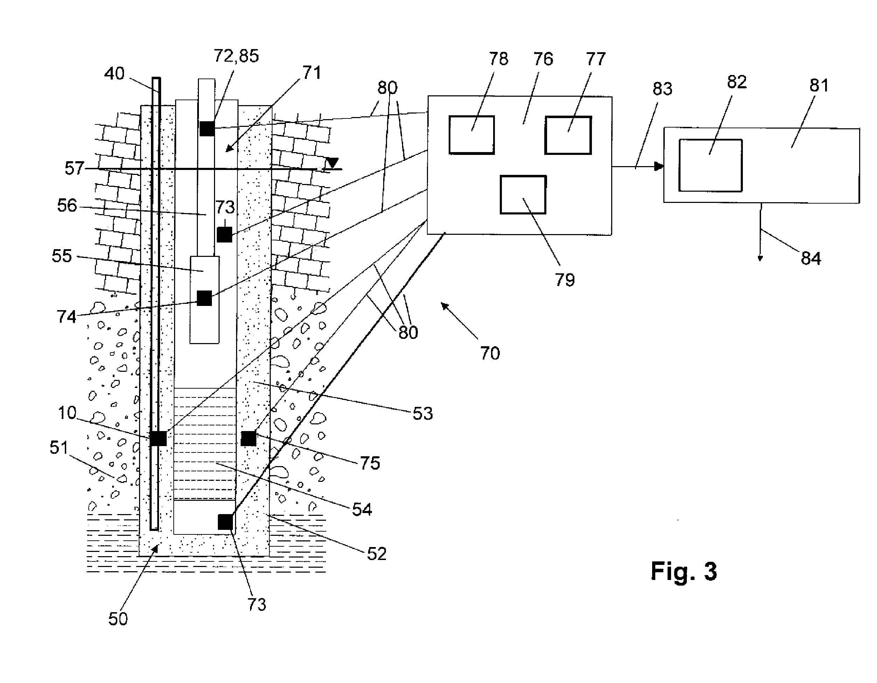

In Figur 3 ist ein erstes Ausführungsbeispiel einer erfindungsgemäßen Einrichtung 70 zum Bestimmen des Zustands eines Brunnens 50 dargestellt.

Der Brunnen 50 wird im Gestein 51 eingebracht. Der Brunnen 50 weist eine Bohrlochwand 52 auf und ist mit Filterkies 53 gefüllt. Im Filterkies 53 ist ein Peilrohr 40 vorgesehen. Weiterhin verfügt der Brunnen 50 über ein Filterrohr 54. Das Wasser wird über eine Pumpeneinrichtung 55 und eine Steigleitung 56 nach oben befördert. Das Wasser steht im Brunnen 50 bis zur Wasserpegellinie 57.

Um nun den Zustand des Brunnens 50 bestimmen und eine Regenerierung des Brunnens 50 rechtzeitig in die Wege leiten zu können, ist die Einrichtung 70 zum Bestimmen des Zustands des Brunnens 50 vorgesehen.

Die Einrichtung 70 verfügt über eine Reihe von Erfassungseinrichtungen 71 zum Erfassen charakteristischer Werte des Brunnens, die wie folgt ausgebildet sind. In dem Ausführungsbeispiel gemäß Figur 3 handelt es sich bei den Erfassungseinrichtungen 71 zunächst um ein Sensorelement 72 zur Bestimmung der Durchflussmenge in der Steigleitung. Weiterhin kann ein Sensorelement 85 vorgesehen sein, um den Belag an der Rohrinnenwand der Steigleitung 56 zu bestimmen. Zur Messung des Wasserdrucks können Drucksensorelemente 73 vorgesehen sein. Weiterhin vorgesehen ist ein Sensorelement 74, um charakteristische Werte der Pumpeneinrichtung 55 zu bestimmen. Ebenso vorgesehen ist ein Sensorelement 75 zur optischen Bestimmung des Zustands des Brunnens. Das Sensorelement 75 ist in einer Weise ausgebildet, wie dies in Figur 1 beschrieben ist, nämlich als optisches Sensorelement mit einer Bestimmungseinrichtung zum Bestimmen der Lichtabsorption in einer Messstrecke. In dem Peilrohr ist zudem wenigstens eine Vorrichtung 10 zum Bestimmen des Zustands des Brunnens 50 vorgesehen, so wie dies im Zusammenhang mit den Figuren 1 und 2 weiter oben im Detail beschrieben ist,

Die von den Sensorelementen 72, 73, 74, 75, 86 und der Vorrichtung 10 ermittelten oder gemessenen Werte werden über Schnittstellen 80 zu einer Auswerteeinrichtung 76 der Einrichtung 70 übertragen. Dies kann bevorzugt über ein drahtgebundenes oder drahtloses Kommunikationsnetz erfolgen. Die Auswerteeinrichtung 76 ist bevorzugt als Rechnereinheit, beispielsweise als eine CPU, ausgebildet. Im einfachsten Fall besteht die Einrichtung 70 zum Bestimmen des Zustands des Brunnens aus der Auswerteeinrichtung 76. In weiterer Ausgestaltung können die Erfassungseinrichtungen vorgesehen sein, die dann insbesondere auch zum Bestandteil der Einrichtung 70 werden oder werden können.

Die Auswerteeinrichtung 76 verfügt über eine Speichereinrichtung 77, in der Referenzwerte zu den einzelnen erfassten charakteristischen Werten abgelegt sind. In einer Vergleichseinrichtung 78 der Auswerteeinrichtung 76 werden die über die Schnittstellen 80 übertragenen charakteristischen Werte des Brunnens mit den Referenzwerten verglichen. In einer Bestimmungseinrichtung 79 der Auswerteeinrichtung 76 wird dann der Zustand des Brunnens 50 bestimmt. Bei den Referenzwerten kann es sich beispielsweise um entsprechende Schwellwerte handeln. Wird ein solcher Schwellwert erreicht oder überschritten, was bedeutet, dass der Brunnen 50 einen kritischen Zustand erreicht hat, der eine Regenerierung erforderlich macht.

Die Auswerteeinrichtung 76 ist über eine Schnittstelle 83 mit einer Anzeigeeinrichtung 81, welche ein Display 82 aufweist, verbunden. Die Anzeigeeinrichtung 81 kann Bestandteil der Einrichtung 70 zur Bestimmung des Zustands des Brunnens, insbesondere von derer Auswerteeinrichtung 76 sein. Alternativ oder zusätzlich kann vorgesehen sein, dass die Anzeigeeinrichtung als ein dazu externes Bauteil ausgebildet ist.

Die von der Bestimmungseinrichtung 79 bestimmten Zustände des Brunnens 50 können auf dem Display 82 der Anzeigeeinrichtung 81 angezeigt beziehungsweise dargestellt werden. Über eine weitere Schnittstelle 84 können die bestimmten Zustände des Brunnens 50 auch noch weiteren Parteien, beispielsweise einer Leitzentrale, zur Verfügung gestellt werden. Dies kann bevorzugt über ein drahtgebundenes oder drahtloses Kommunikationsnetz erfolgen.

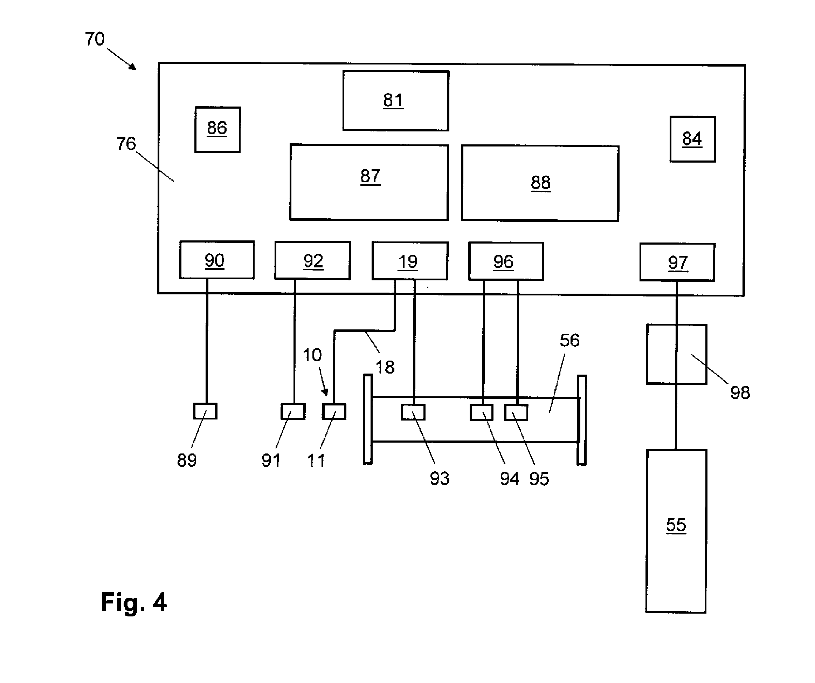

In Figur 4 ist ein zweites Ausführungsbeispiel einer erfindungsgemäßen Einrichtung 70 zum Bestimmen des Zustands eines Brunnens dargestellt.

Herzstück dieser Einrichtung 70 ist die Auswerteeinrichtung 76.Im einfachsten Fall besteht die Einrichtung 70 lediglich aus der Auswerteeinrichtung 76. In einem solchen Fall verfügt die Auswerteeinrichtung 76 über geeignete Schnittstellen zu den nachfolgend beschriebenen weiteren Komponenten. Alternativ oder zusätzlich kann vorgesehen sein, dass zumindest einzelne der nachfolgend beschriebenen weiteren Komponenten auch Bestandteil der Einrichtung 70 sind.

Die Auswerteeinrichtung 76 wird über eine Stromversorgung 86 mit elektrischer Energie versorgt. Die Auswerteeinrichtung 76 verfügt über eine Rechnereinrichtung 87, in der die eigentliche Auswertung vorgenommen wird. Die Ergebnisse der Auswertung können auf einer Anzeigeeinrichtung 81 dargestellt werden. Alternativ oder zusätzlich können die Ergebnisse der Auswertung über eine Schnittstelle 84 nach außen übertragen werden, beispielsweise zu einer externen Prozessleitstelle.

In dem nicht näher dargestellten Brunnen befindet sich beispielsweise eine Pumpeneinrichtung 55, beispielsweise eine Unterwasserpumpe. Die Pumpe 55 wird über einen Anschlussverteiler 98 mit elektrischer Energie versorgt. Die charakteristischen Werte der Pumpe 55 können erfasst und in einer zugeordneten Auswerteinheit 97 ausgewertet werden. Die Auswerteeinheit 97 kann die Werte zur weiteren Verarbeitung an die Rechnereinheit 87 übertragen.

Das in Figur 4 dargestellte System 70 weist eine Reihe von Erfassungseinrichtungen auf, über die charakteristische Werte des Brunnens ermittelt werden können. Beispielsweise kann eine Wasserstandssonde 89 vorgesehen sein. Die über die Wasserstandssonde 89 ermittelten Werte können in einer zugeordneten Auswerteinheit 90 ausgewertet werden. Die Auswerteeinheit 90 kann die Werte zur weiteren Verarbeitung an die Rechnereinheit 87 übertragen. Alternativ oder zusätzlich kann ein Ultraschallsensor 91 und/oder ein Sonarsensorelement vorgesehen sein, Mit dem Ultraschallsensor 91 kann beispielsweise eine Auflandungsmessung vorgenommen werden. Die über den Ultraschallsensor 91 ermittelten Werte können in einer zugeordneten Auswerteinheit 92 ausgewertet werden. Die Auswerteeinheit 92 kann die Werte zur weiteren Verarbeitung an die Rechnereinheit 87 übertragen. Weiterhin kann eine wie in den Figuren 1 und 2 dargestellte und vorstehend näher beschriebene Vorrichtung 10 zum Bestimmen der Verockerung des Brunnens vorgesehen sein. Hierzu wird auf die vorstehenden Ausführungen verwiesen und Bezug genommen. Die Vorrichtung 10 kann eine Auswerteeinheit 19 aufweisen, die über einen Lichtleiter 18 mit dem Grundkörper 11 der Vorrichtung 10 verbunden ist.

Weiterhin vorgesehen sein kann ein Sensorelement 93 zur optischen Messung von Belägen in einer Steigleitung 56 des Brunnens. Darüber hinaus können auch Sensorelemente vorgesehen sein, um Pumpenleistungsdaten auszuwerten. Hierbei kann es sich beispielsweise um einen Druckaufnehmer 94 oder einen magnetisch induktiven Durchflusssensor 95 handeln. Diese Sensorelemente können sich beispielsweise in der Steigleitung 56 des Brunnens befinden. Natürlich ist die Erfindung nicht auf diese konkret genanntem Sensorelemente beschränkt. Die beiden letztgenannten Sensorelemente sind mit einer entsprechenden Auswerteeinheit 96 zur Auswertung von Pumpenleistungsdaten verbunden. Die Auswerteeinheit 96 kann die Werte zur weiteren Verarbeitung an die Rechnereinheit 87 übertragen.

Von den einzelnen Erfassungseinrichtungen erfasste Werte oder Signale können in einem Ein/Ausgabemodul 88 der Auswerteeinrichtung 76 zur weiteren Verarbeitung digitalisiert werden. Ebenso können die von der Rechnereinrichtung 87 erzeugten Werte dort digitalisiert werden.

Die wie vorstehend ermittelten oder gemessenen Werte werden von den jeweiligen Auswerteeinheiten über Schnittstellen zu der Rechnereinheit 87 der Einrichtung 70 übertragen. Die Rechnereinheit 87 greift auf eine Speichereinrichtung (nicht dargestellt) zu, in der Referenzwerte zu den einzelnen erfassten charakteristischen Werten abgelegt sind. In einer Vergleichseinrichtung werden die über die Schnittstellen übertragenen charakteristischen Werte mit den Referenzwerten verglichen. Daraus wird dann der Zustand des Brunnens bestimmt. Bei den Referenzwerten kann es sich beispielsweise um entsprechende Schwellwerte handeln. Wird ein solcher Schwellwert erreicht oder überschritten, bedeutet dies, dass der Brunnen einen kritischen Zustand erreicht hat, der eine Regenerierung erforderlich macht.

Durch die vorliegende Erfindung kann auf einfache und kostengünstige Weise fortlaufend der Zustand des Brunnens bestimmt werden, ohne dass der Brunnen dazu geöffnet werden muss, und ohne dass dazu eine Person vor Ort die erforderlichen Untersuchungen vornehmen muss. Die Untersuchungen können automatisch in bestimmten Zeitabständen, gegebenenfalls auch kontinuierlich durchgeführt werden, so dass eine verlässliche Information über den Zustand des Brunnens vorliegt und eine Regenerierung frühzeitig initiiert werden kann, bevor der Zustand einen kritischen Wert erreicht.

### Bezugszeichenliste

- 10: Vorrichtung zum Bestimmen des Zustands eines Brunnens
- 11: Grundkörper
- 12: Bereich des Grundkörpers, der eine Messstrecke bildet
- 13: Optische Messstrecke
- 14: Bestimmungseinrichtung zur Bestimmung der Lichtabsorption
- 15: Einrichtung zum Abstrahlen von Licht
- 16: Lichtleiter
- 17: Einrichtung zum Empfangen von Licht
- 18: Lichtleiter
- 19: Auswerteeinheit
- 20: Einziehung
- 21: Grundkörperwand
- 22: Zur Grundkörperwand zurückgesetzte Wand
- 23: Verbindungswand
- 24: Verbindungswand
- 25: Öffnung zur Aufnahme einer Einrichtung zum Abstrahlen von Licht
- 26: Öffnung zur Aufnahme einer Einrichtung zum Empfangen von Licht
- 27: Gewinde
- 28: Rohrende
- 29: Rohrende
- 30: Ende der Messstrecke
- 31: Ende der Messstrecke
- 32: Grundkörperquerschnittsfläche
- 33: Zweite Querschnittsfläche

- 40: Peilrohr
- 41: Peilrohrsegment

- 50: Brunnen
- 51: Gestein
- 52: Bohrlochwand
- 53: Filterkies
- 54: Filterrohr
- 55: Pumpeneinrichtung
- 56: Steigleitung
- 57: Wasserpegellinie

- 70: Einrichtung zum Bestimmen des Zustands eines Brunnens
- 71: Erfassungseinrichtung
- 72: Sensorelement zur Bestimmung der Durchflussmenge
- 73: Drucksensorelement
- 74: Sensorelement zur Bestimmung charakteristischer Werte einer Pumpeneinrichtung
- 75: Sensorelement zur optischen Bestimmung des Zustands eines Brunnens
- 76: Auswerteeinrichtung
- 77: Speichereinrichtung
- 78: Vergleichseinrichtung
- 79: Bestimmungseinrichtung
- 80: Schnittstelle
- 81: Anzeigeeinrichtung
- 82: Display
- 83: Schnittstelle
- 84: Schnittstelle
- 85: Sensorelement zur Bestimmung des Belags an einer Rohrinnenwand
- 86: Stromversorgung
- 87: Rechnereinrichtung
- 88: Ein-/Ausgabemodul
- 89: Sensorelement zur Wasserstandsmessung
- 90: Auswerteeinheit
- 91: Ultraschallsensor
- 92: Auswerteeinheit
- 93: Sensorelement zur optischen Messung von Belägen an der Steigleitung
- 94: Druckaufnehmer
- 95: Magnetisch Induktiver Durchflussmesser
- 96: Auswerteeinheit
- 97: Auswerteinheit
- 98: Anschlussverteiler

## Patentansprüche

1. Vorrichtung (10) zum optischen Bestimmen des Zustands eines Brunnens (50), **dadurch gekennzeichnet, dass** die Vorrichtung (10) zum optischen Bestimmen der Verockerung des Brunnens ausgebildet ist, dass die Vorrichtung (10) einen Grundkörper (11), insbesondere einen Hohlkörper, aufweist, dass ein Bereich des Grundkörpers (11 ausgestaltet ist, so dass er eine definierte optische Messstrecke (13) bildet oder aufweist, und dass die Vorrichtung (10) eine Bestimmungseinrichtung (14) zum Bestimmen der Lichtabsorption im Bereich der definierten optischen Messstrecke (13) aufweist oder dass der Grundkörper (11) zur Aufnahme einer Bestimmungseinrichtung (14) zum Bestimmen der Lichtabsorption im Bereich der definierten optischen Messstrecke (13) ausgebildet ist.

2. Vorrichtung nach Anspruch 1, **dadurch gekennzeichnet, dass** die Bestimmungseinrichtung (14) an einem Ende (30) der Messstrecke (13) eine Einrichtung (15) zum Abstrahlen von Licht in die Messstrecke (13) aufweist oder zur Anordnung einer Einrichtung (15) zum Abstrahlen von Licht in die Messstrecke (13) ausgebildet ist, und dass die Bestimmungseinrichtung (14) am anderen Ende (31) der Messstrecke (13), vorzugsweise der Einrichtung (15) zum Abstrahlen von Licht gegenüberliegend, eine Einrichtung (17) zum Empfangen von Licht aus der Messstrecke (13) aufweist oder zur Anordnung einer Einrichtung (17) zum Empfangen von Licht aus der Messstrecke (13) ausgebildet ist.

3. Vorrichtung nach Anspruch 2, **dadurch gekennzeichnet, dass** die Einrichtung (15) zum Abstrahlen von Licht in die Messstrecke (13) und/oder dass die Einrichtung (17) zum Empfangen von Licht aus der Messstrecke (13) eine Schnittstelle zu einer Auswerteeinheit (19) der Bestimmungseinrichtung (14) aufweist.

4. Vorrichtung nach einem der Ansprüche 1 bis 3, **dadurch gekennzeichnet, dass** der Grundkörper (11) rohrförmig ausgebildet ist und dass dar rohrförmige Grundkörper (11) an wenigstens einem Rohrende (28, 29) offen ist, und/oder dass der Grundkörper (11) eine Einziehung (20) aufweist und dass die Einziehung (20) die optische Messstrecke definiert.

5. Vorrichtung nach Anspruch 4, **dadurch gekennzeichnet, dass** der Grundkörper (11) eine Grundquerschnittsfläche (32) aufweist, dass der Grundkörper (11) im Bereich der Einziehung (20) eine zweite Querschnittsfläche (33) aufweist und dass die zweite Querschnittsfläche (33) kleiner als die Grundquerschnittsfläche (32) ist.

6. Einrichtung (70) zum Bestimmen des Zustands eines Brunnens (50), **gekennzeichnet durch** eine Auswerteeinrichtung (76) mit einer Schnittstelle zu wenigstens einer Erfassungseinrichtung (71) und/oder einer Eingabeeinrichtung zum Erfassen charakteristischer Werte des Brunnens, wobei die Auswerteeinrichtung (76) zum Auswerten erfasster charakteristischer Werte des Brunnens (50) und zum Bestimmen des Zustands des Brunnens (50) ausgebildet ist, und eine Anzeigeeinrichtung (81) zum Anzeigen des bestimmten Zustands und/oder eine Schnittstelle zu einer Anzeigeeinrichtung (81) zum Anzeigen des bestimmten Zustands.

7. Einrichtung nach Anspruch 6, **dadurch gekennzeichnet, dass** die Einrichtung wenigstens eine Erfassungseinrichtung (71) zum Erfassen charakteristischer Werte des Brunnens (50) aufweist.

8. Einrichtung nach Anspruch 7, **dadurch gekennzeichnet, dass** die Erfassungseinrichtung (71) zum Erfassen charakteristischer Werte des Brunnens (50) wenigstens ein Sensorelement (72) zur Erfassung der Durchflussmenge von Wasser und/oder wenigstens ein Sensorelement (89) zur Wasserstandsmessung und/oder wenigstens ein Sensorelement (85, 93) zur Erfassung von Belägen an Rohrinnenwänden und/oder wenigstens ein Drucksensorelement (73) und/oder wenigstens ein Ultraschallsensorelement (91) und/oder wenigstens ein Sonarsensorelement und/oder wenigstens ein Sensorelement (74) zur Bestimmung charakteristischer Werte einer Pumpeneinrichtung (55) und/oder wenigstens ein optisches Sensorelement (75) zum Bestimmen des Zustands eines Brunnens (50) und/oder wenigstens eine Vorrichtung (10) gemäß einem der Ansprüche 1 bis 5 aufweist.

9. Einrichtung nach einem der Ansprüche 6 bis 8, **dadurch gekennzeichnet, dass** eine Speichereinrichtung (77) vorgesehen ist, in der Referenzwerte zu den erfassten charakteristischen Werten des Brunnens (50) abgelegt sind.

10. Einrichtung nach einem der Ansprüche 6 bis 9, **dadurch gekennzeichnet, dass** die Auswerteeinrichtung (76) eine Vergleichseinrichtung (78) zum Erzeugen von Vergleichswerten durch Vergleichen der erfassten charakteristischen Werte mit Referenzwerten aufweist und dass die Auswerteeinrichtung (76) eine Bestimmungseinrichtung (79) zum Bestimmen des Zustands des Brunnens (50) auf Basis der von der Vergleichseinrichtung (78) erzeugten Vergleichswerte aufweist.

11. Verfahren zum Bestimmen des Zustands eines Brunnens (50), **gekennzeichnet durch** folgende Schritte:
a) erfasste charakteristische Werte des Brunnens werden von einer Auswerteeinrichtung (76) zum Auswerten der erfassten charakteristischen Werte des Brunnens (50) und zum Bestimmen des Alterungsgrades des Brunnens (50) empfangen;
b) anhand der erfassten charakteristischen Werte wird in der Auswerteeinrichtung (76) der Zustand des Brunnens (50) bestimmt;
c) der bestimmte Zustand wird von der Auswerteeinrichtung (76) zu einer Anzeigeeinrichtung (81) zum Anzeigen des bestimmten Zustands übertragen.

12. Verfahren nach Anspruch 11, **dadurch gekennzeichnet, dass** mittels wenigstens einer Erfassungseinrichtung (71) zum Erfassen charakteristischer Werte des Brunnens (50), die im Brunnen (50) oder in der Umgebung des Brunnens (50) vorgesehen ist, werden, insbesondere in definierten Zeitabständen oder kontinuierlich, charakteristische Werte des Brunnens (50) erfasst und an die Auswerteeinrichtung (76) übertragen werden.

13. Verfahren nach Anspruch 11 oder 12, **dadurch gekennzeichnet, dass** die erfassten charakteristischen Werte in der Auswerteeinrichtung (76) mit Referenzwerten zu den charakteristischen Werten verglichen werden und dass auf Basis des Vergleichs der Zustand des Brunnens (50) bestimmt wird.

14. Verfahren nach einem der Ansprüche 11 bis 13, **dadurch gekennzeichnet, dass** dieses mit einer Einrichtung (70) gemäß einem der Ansprüche 6 bis 10 durchgeführt wird.

15. Verfahren nach einem der Ansprüche 11 bis 14, **dadurch gekennzeichnet, dass** die Erfassungseinrichtung (71) zum Erfassen charakteristischer Werte des Brunnens (50) wenigstens eine Vorrichtung (10) gemäß einem der Ansprüche 1 bis 5 aufweist, dass die Lichtabsorption im Bereich einer definierten optischen Messstrecke (13) bestimmt wird und dass auf Basis der bestimmten Lichtabsorptionswerte der Zustand des Brunnens (50) bestimmt wird, und/oder dass die Erfassungseinrichtung (71) zum Erfassen charakteristischer Werte des Brunnens (50) wenigstens ein Sensorelement (72) zur Erfassung der Durchflussmenge von Wasser und/oder wenigstens ein Sensorelement (89) zur Wasserstandsmessung und/oder wenigstens ein Sensorelement (85, 93) zur Erfassung von Belägen an Rohrinnenwänden und/oder wenigstens ein optisches Sensorelement (75) zum Bestimmen des Zustands eines Brunnens (50) und/oder wenigstens ein Drucksensorelement (73) und/oder wenigstens ein Ultraschallsensorelement (91) und/oder wenigstens ein Sonarsensorelement und/oder wenigstens ein Sensorelement (74) zur Bestimmung charakteristischer Werte einer Pumpeneinrichtung (55) aufweist und dass auf Basis der erfassten charakteristischen Werte der Zustand des Brunnens (50) bestimmt wird.
